# FASCICULE DE BREVET EUROPEEN

(11) **EP 1 933 437 B1**
(45) Date de publication et mention de la délivrance du brevet: **05.03.2014**
(21) Numéro de dépôt: 07354059.3
(22) Date de dépôt: 12.10.2007
(51) Int. Cl.: H02G 5/00, H01R 25/16, H01R 13/53

(54) **Dispositif de transposition pour une canalisation électrique préfabriquée**
Umsetzungsvorrichtung für einen Schienenverteiler
Transposition device for a prefabricated electrical line

(30) Priorité: 15.12.2006 FR 0610918
(43) Date de publication de la demande: 18.06.2008
(73) Titulaire: Schneider Electric Industries SAS, 92500 Rueil-Malmaison (FR)
(72) Inventeur: Legendre, Philippe, 38050 Grenoble Cedex 09 (FR); Pozzobon, Jean-Laurent, 38050 Grenoble Cedex 09 (FR)
(74) Mandataire: Tripodi, Paul

(56) Documents cités:
- FR-A- 1 143 060
- US-A- 2 786 152
- US-A- 2 912 603
- US-A- 3 148 312
- US-A- 3 213 183
- US-A- 4 262 163

## Description

La présente invention concerne un dispositif de transposition pour une canalisation électrique préfabriquée, ladite canalisation comportant un certain nombre de barres conductrices distribuant différentes phases y compris ou non le neutre, lesdites barres s'étendant sensiblement parallèlement les unes par rapport aux autres, ledit dispositif de transposition étant destiné à inverser la position d'au moins deux barres l'une par rapport à l'autre, dans la canalisation, ce dispositif étant destiné à être incorporé dans ladite canalisation, et comportant un même nombre de portions de barre que le nombre de barres précitées de la canalisation, au moins l'une de ces portions de barre étant interrompue à l'intérieur du dispositif pour former deux parties de portions de barres, ces parties comportant à leur extrémités un pliage vers l'extérieur dudit dispositif formant ainsi une partie d'extrémité décalée vers l'extérieur de manière à augmenter l'espace entre les parties d'extrémités des parties de portions de barre, cet espace permettant le raccordement électrique desdites parties d'extrémités de portions de barres l'une avec l'autre au moyen d'un pont conducteur fixé sur lesdites parties d'extrémités et reliant électriquement lesdites parties d'extrémités par l'extérieur de l'ensemble des portions de barres d'un côté ou de l'autre du dispositif de manière que les deux parties de portions de barre précitées présentent une position différente à l'entrée et à la sortie du dispositif de transposition, la transposition étant réalisée sur la portion de barre se trouvant à l'une des extrémités de cet ensemble de portions de barres.

Actuellement, la transposition des phases ou du neutre s'effectue sur des alimentations situées en bout de ligne et engendre des volumes importants. Cette transposition est réalisée spécifiquement pour chaque cas, d'où des délais de réalisations et des coûts de revient plus élevés.

On connaît également le document US 3 213 183 décrivant un dispositif de transposition pour une canalisation électrique préfabriquée comportant les caractéristiques du préambule de la revendication 1.

La présente invention propose une canalisation électrique préfabriquée présentant un faible encombrement, facile à incorporer dans une ligne à n'importe quel niveau, et présentant une bonne tenue aux courts-circuits.

A cet effet, la présente invention a pour objet un dispositif de transposition pour une canalisation électrique préfabriquée selon la revendication 1.

Selon une caractéristique particulière, le pont conducteur précité présente une section transversale en forme de U, ledit pont présentant une base et deux ailes, lesdites ailes étant fixées respectivement aux deux parties d'extrémités des parties de portions de barres dont la position est inversée.

Selon une autre caractéristique, les ailes du pont conducteur sont fixées sur lesdites parties d'extrémités des portions de barres au moyen de vis, d'écrous et d'orifices prévus dans lesdites parties d'extrémités des portions de barres et dans les ailes précitées du pont conducteur.

Selon une autre caractéristique, les portions de barre sont plaquées et recouvertes d'un matériau isolant et les parties de conducteur situées à l'intérieur du pont conducteur, sur la longueur dudit pont, le matériau isolant précité a été retiré.

Mais d'autres caractéristiques et avantages de l'invention apparaîtront mieux dans la description détaillée qui suit et se réfère aux dessins annexés donnés uniquement à titre d'exemple et dans lesquels :
- La figure 1 est une vue en perspective du dispositif de transposition selon l'invention,
- La figure 2 est une vue partielle en perspective, illustrant le raccordement électrique de deux parties de portions de barres sur lesquelles est effectuée la transposition, avant le raccordement électrique desdites portions,

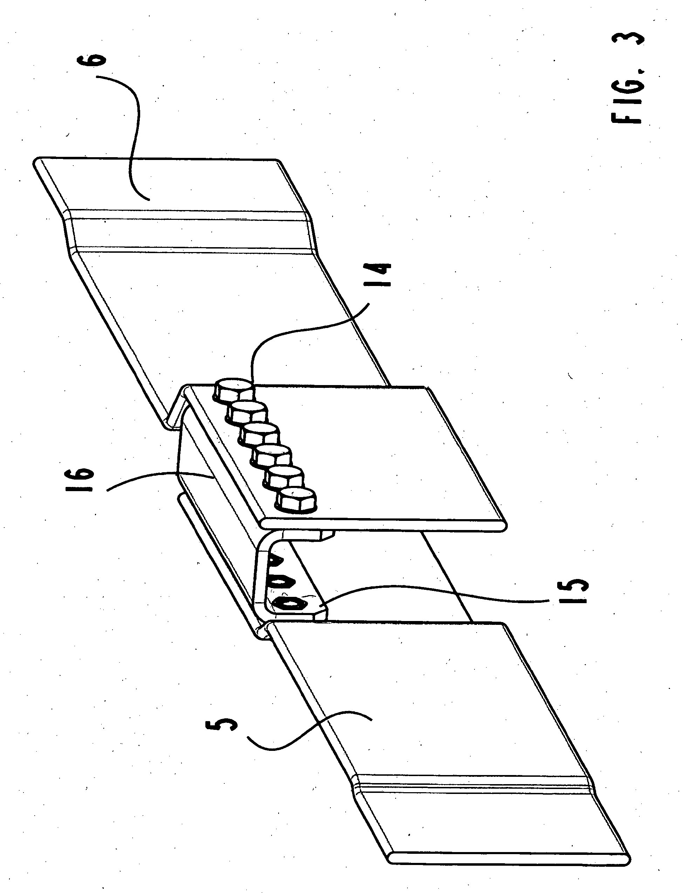

- La figure 3 est une vue partielle en perspective illustrant ce même raccordement en position raccordée des parties de portions de barres,

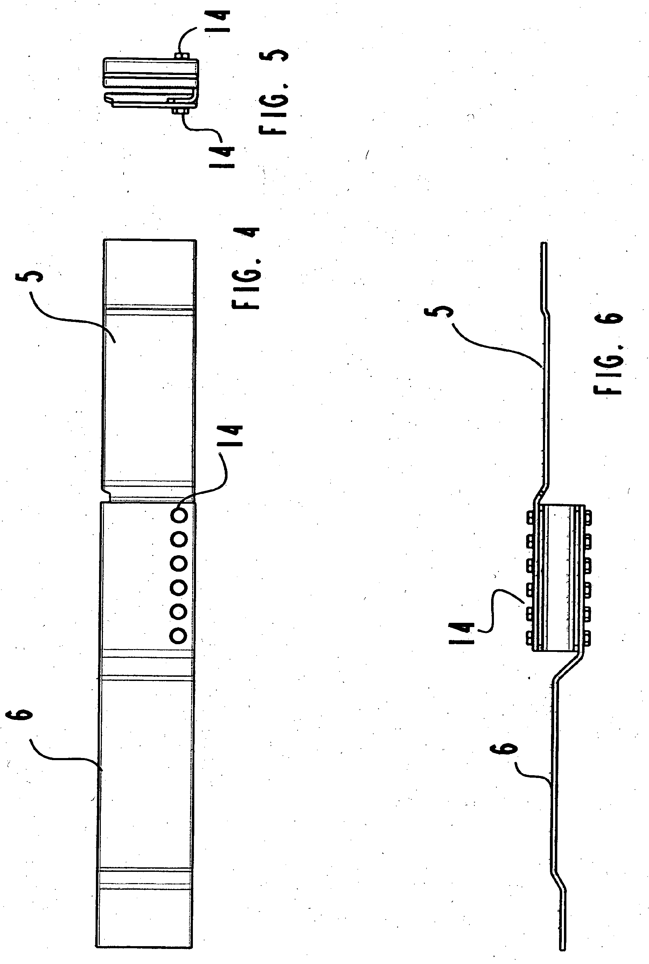

- La figure 4 est une vue de côté de deux parties de portions de barres sur lesquelles a été réalisée une transposition, et reliées électriquement par le bas du dispositif,
- La figure 5 est une vue de gauche de la figure précédente,
- La figure 6 est une vue de dessus de la figure 4,
- La figure 7 est une vue en perspective, d'un dispositif de transposition selon un exemple utile à la compréhension de l'invention, dans laquelle sont réalisées deux transpositions de phase,
- La figure 8 est une vue de face de la figure précédente,
- La figure 9 est une vue de dessus de la figure 8, et
- La figure 10 est une vue de dessus d'un dispositif de transposition selon une réalisation de l'invention dans laquelle n'est réalisée qu'une seule transposition du neutre.

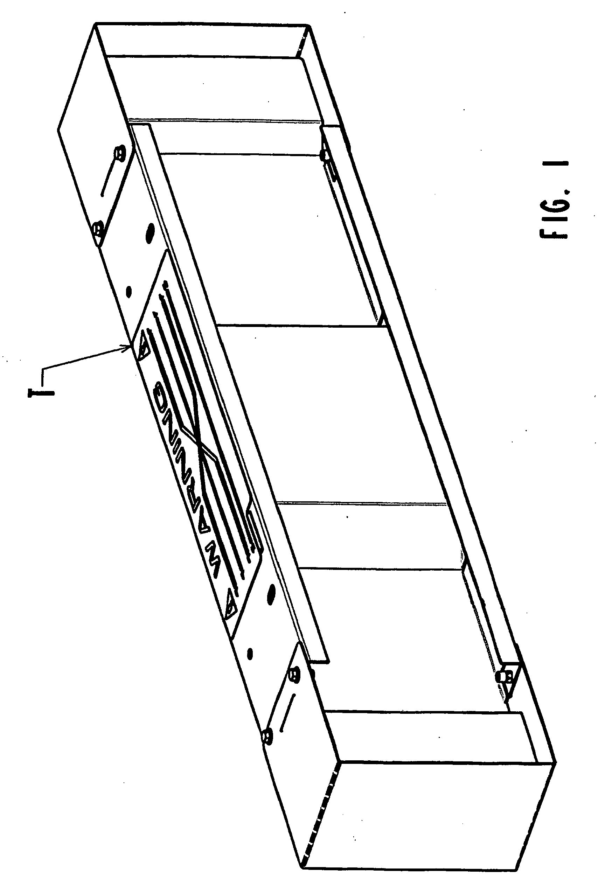

Sur la figure 1, est représenté un dispositif de transposition T pour une canalisation électrique préfabriquée, selon l'invention, cette canalisation comprenant de manière connue en soi un certain nombre de barres conductrices logées dans un boîtier isolant. Ces barres s'étendent parallèlement les unes aux autres et présentent des sections différentes suivant le calibre associé à la barre.

Ces barres distribuent les différentes phases et le neutre suivant l'ordre dans lequel elles sont disposées dans la canalisation.

Le dispositif de transposition T selon l'invention est destiné à être incorporé dans la canalisation et comprend un certain nombre de portions de barres 1,2,3,4, ce nombre étant de quatre dans la réalisation décrite et correspondant au nombre de barres de la canalisation. Ces portions de barres 1,2,3 et 4 s'étendent elles aussi parallèlement les unes par rapport aux autres et sont destinées à conduire les différentes phases 1,2,3 et le neutre n suivant le même ordre que celui des barres de la canalisation.

Ainsi, sur les figures, les portions de barres 1,2,3 et 4 distribuent successivement respectivement le neutre et les phases 1,2 et 3.

Le dispositif de transposition T selon l'invention a pour but d'inverser la position des portions de barres l'une par rapport à l'autre dans la canalisation.

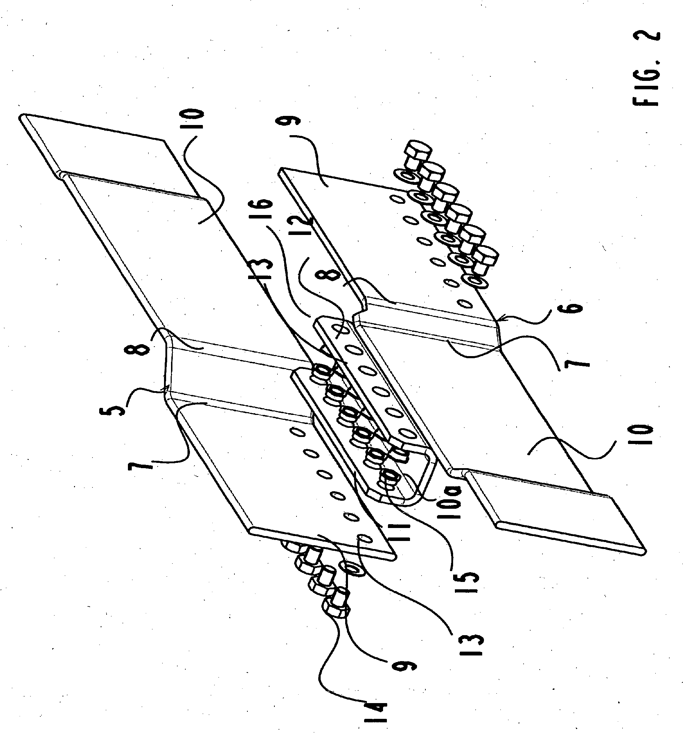

A cet effet, les portions de barres qui sont destinées à faire l'objet d'une transposition, dans le dispositif de transposition T, sont interrompus à l'intérieur du dispositif et forment deux parties de portions de barre 5,6 comportant chacune deux plis successifs 7,8 délimitant une partie d'extrémité dite partie après pliage 9 et une partie avant pliage 10. Cette partie d'extrémité 9 dite partie après pliage, s'étend parallèlement à la portion de canalisation avant pliage 10, mais en étant décalée vers l'extérieur du dispositif T par rapport à cette partie 10 (fig.2). Ce décalage permet le logement d'un pont conducteur 16 de section transversale en forme de U. La longueur de la partie d'extrémité 9 après pliage de chaque portion de barre 5,6 correspond sensiblement à la longueur du pont conducteur précité 16. Ce pont conducteur 16 comporte une base 10a et deux ailes 11,12, ces deux ailes 11,12 étant destinées à être fixées sur la face interne des parties d'extrémité 9 dites après pliage des portions de barres à relier électriquement. A cet effet, ces ailes 11,12 et ces parties d'extrémités 9 comportent des orifices 13 destinés à coopérer avec des vis 14 et écrous 15 pour réaliser ladite fixation.

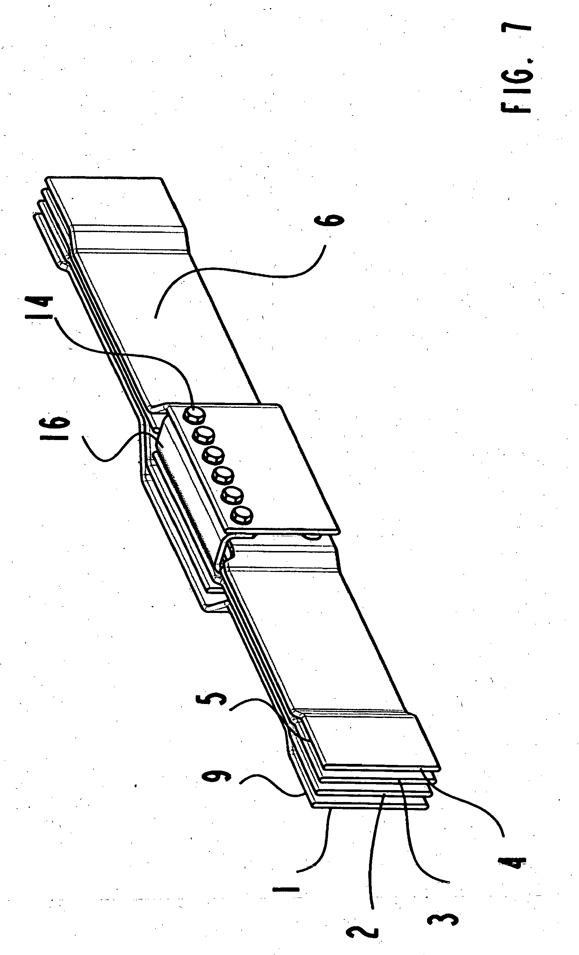

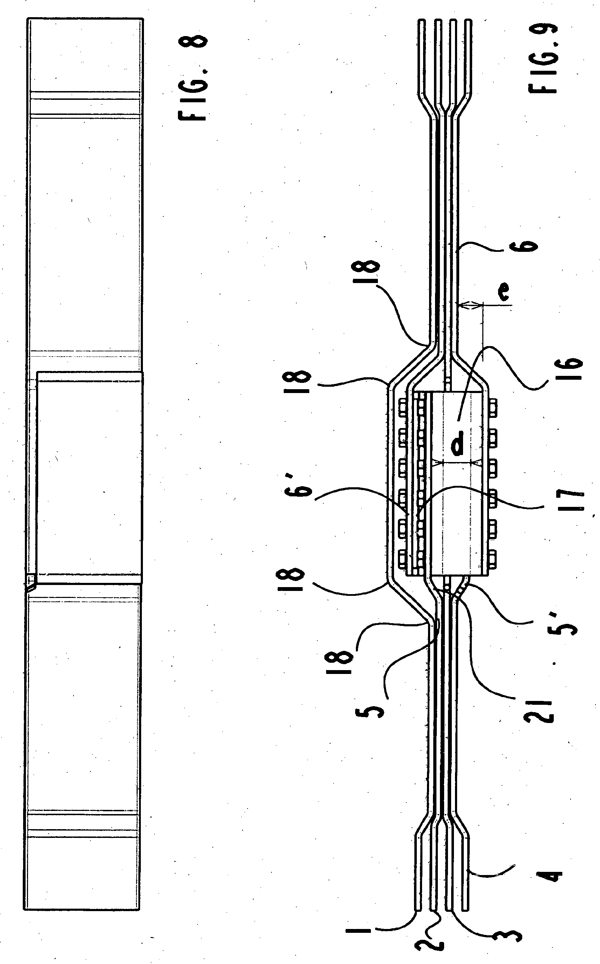

Selon l'exemple illustré sur les figures 7,8 et 9, la transposition est réalisée sur les barres distribuant les phases 1 et 3. Ainsi, les parties d'extrémités 9 après pliage des parties de portions de barres 5,6 et 5',6'des portions de barres correspondant à la phase 1 et à la phase 3 sont interrompues et pliées de la manière qui vient d'être décrite. Un premier pont 16 réalisant la transposition de la phase 1 est disposé à la partie supérieure du dispositif et relie les parties 5,6 de portions de barres correspondant à la phase 1, lesdites parties 5,6 présentant une position inversée l'une par rapport à l'autre. Un second pont 17 réalisant la transposition de la phase 3 est disposé à la partie inférieure du dispositif et relie les parties 5',6' de portions de barres correspondant à la phase 3, présentant une position inversée l'une par rapport à l'autre. Ainsi, la barre 2 correspondant à la phase 1 prend la position de la barre 4 correspondant à la phase 3 et inversement. On notera que dans cet exemple, la barre 1 de neutre, qui ne comporte pas de transposition, est pliée vers l'extérieur suivant quatre lignes de pliage 18 de manière à créer un espace entre ladite barre du neutre 1 et les autres barres pour loger les ponts conducteurs précités 16,17.

Les portions de barres destinées à véhiculer les phases 1, 2 et 3 comportent également un pliage 21 de manière que chacune des portions de barre présente deux parties s'étendant suivant des plans parallèles mais à une certaine distance d l'un de l'autre, cette distance étant environ de moitié par rapport à celle e séparant les parties de portions de barres 10 avant pliage et les partie de portion de barre 9 après pliage, des portions de conducteur de neutre 1.

L'objet décrit dans la présente description et représenté dans les figures: 2 à 9 n'est pas couvert par les revendications. Ainsi, les exemples concernés ne font pas partie de l'invention mais représentent un élément de l'état de la technique qui est utile à la compréhension de l'invention.

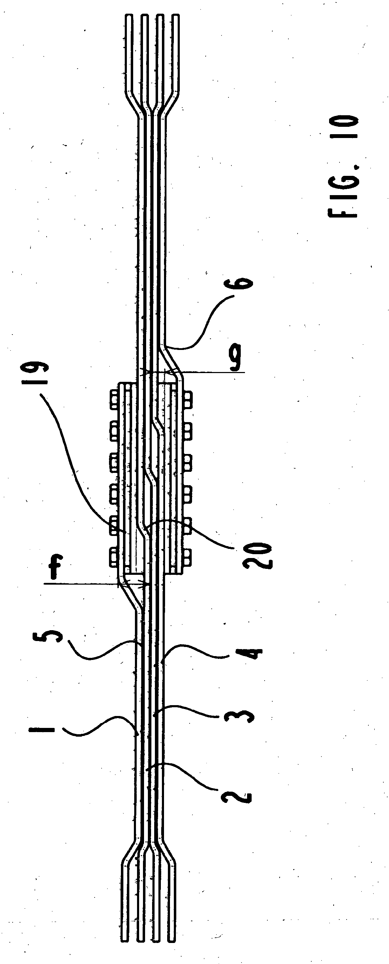

Selon la réalisation décrite sur la figure 10, cette transposition est réalisée sur la barre 1 distribuant le neutre n. Ainsi, la portion de barre 1 de neutre est interrompue à l'intérieur du dispositif T et les deux parties 5,6 de portions de barres du neutre formées sont pliées de la manière qui a été décrite précédemment. Un pont conducteur 19 est disposé à la partie inférieure du dispositif et relie électriquement les parties 5,6 de portions de barre correspondant au neutre présentant une position inversée l'une par rapport à l'autre à l'entrée et à la sortie du dispositif.

Ainsi, l'ordre à l'entrée du dispositif est neutre, phase 1, phase 2, phase 3, tandis que l'ordre à la sortie est phase 1, phase 2,phase 3 et neutre.

On notera que dans cette réalisation, les portions de barres 2,3 et 4 distribuant les phases comportent également un pliage. Le décalage f entre les parties de portions de barre avant et après pliage dans le cas de la partie de conducteur distribuant le neutre est le double de celui g associé aux parties de portions de barres distribuant les phases.

On a donc réalisé suivant l'invention un dispositif de transposition pour une canalisation, de conception simple et présentant un encombrement réduit correspondant à celui d'un élément de ligne.

Ce dispositif est facile à incorporer dans une ligne à n'importe quel niveau et se présente sous la forme d'un élément standard présentant une tenue aux courts-circuits homogène. Le dispositif selon l'invention permet d'améliorer les conditions de production et d'ergonomie des postes de montage. Il permet également une réduction du temps d'étude d'implantation de canalisation pour les bureaux d'étude d'affaires.

Bien entendu, l'invention est définie par les revendications annexées et n'est pas limitée au mode de réalisation décrit et illustré qui n'a été donné qu'à titre d'exemple.

## Revendications

1. Dispositif de transposition pour une canalisation électrique préfabriquée, ladite canalisation comportant un certain nombre de barres conductrices distribuant différentes phases y compris ou non le neutre, lesdites barres s'étendant sensiblement parallèlement les unes par rapport aux autres, ledit dispositif de transposition étant destiné à inverser la position d'au moins deux barres l'une par rapport à l'autre, dans la canalisation, ce dispositif étant destiné à être incorporé dans ladite canalisation, et comportant un même nombre de portions de barre (1,2,3,4) que le nombre de barres précitées de la canalisation, au moins l'une de ces portions de barre (1,2,3 et 4) étant interrompue à l'intérieur du dispositif pour former deux parties (5,6) de portions de barres, ces parties comportant à leur extrémités un pliage vers l'extérieur dudit dispositif formant ainsi une partie d'extrémité décalée vers l'extérieur de manière à augmenter l'espace entre les parties d'extrémités des parties de portions de barre, cet espace permettant le raccordement électrique desdites parties d'extrémités de portions de barres l'une avec l'autre au moyen d'un pont conducteur (19) fixé sur lesdites parties d'extrémités (9) et reliant électriquement lesdites parties d'extrémités (9) par l'extérieur de l'ensemble des portions de barres (1,2,3,4) d'un côté ou de l'autre du dispositif de manière que les deux parties (5,6) de portions de barre précitées présentent une position différente à l'entrée et à la sortie du dispositif de transposition, la transposition étant réalisée sur la portion de barre (1) se trouvant à l'une des extrémités de cet ensemble de portions de barres (1,2,3,4), dispositif dans lequel les autres portions de barre (2,3,4) du dispositif de transposition comportent un pliage (20), de manière que chacune de ces autres portions de barre présente deux parties s'étendant suivant des plans parallèles, dispositif **caractérisé en ce que** lesdits plans parallèles sont séparés par une certaine distance g l'un de l'autre, cette distance g étant environ la moitié de celle f séparant les parties de portions de barres avant pliage et les parties de portions de barres après pliage de la portion de barre (1) se trouvant à l'extrémité précitée.

2. Dispositif de transposition selon la revendication 1, **caractérisé en ce que** le pont conducteur précité (19) présente une section transversale en forme de U, ledit pont présentant une base et deux ailes, lesdites ailes étant fixées respectivement aux deux parties d'extrémités des parties de portions de barres (5,6) dont la position est inversée.

3. Dispositif de transposition selon la revendication 2, **caractérisé en ce que** les ailes du pont conducteur (19) sont fixées sur lesdites parties d'extrémités des portions de barres au moyen de vis, d'écrous et d'orifices prévus dans lesdites parties d'extrémités de barres et dans les ailes précitées du pont conducteur (19).

4. Dispositif selon l'une quelconque des revendications 1 à 3, **caractérisé en ce que** les portions de barre (1,2,3,4) sont plaquées et recouvertes d'un matériau isolant et **en ce que** sur les parties de conducteur situées à l'intérieur du pont conducteur (19), sur la longueur dudit pont, le matériau isolant précité a été retiré.

## Patentansprüche

1. Positionswechseleinrichtung für ein fabrikfertiges Schienenverteilersystem, das eine bestimmte Anzahl von Stromschienen zur Verteilung mehrerer Phasenleiter mit oder ohne Neutralleiter umfasst, welche Stromschienen annähernd parallel zueinander angeordnet sind, wobei die Positionswechseleinrichtung dazu dient, die relative Lage mindestens zweier Schienen zueinander im Schienenverteilersystem umzukehren sowie in das genannte Schienenverteilersystem integriert zu werden und eine Anzahl von Schienenabschnitten (1, 2, 3, 4) umfasst, die der Anzahl der genannten Schienen des Verteilersystems entspricht, wobei mindestens einer der genannten Schienenabschnitte (1,2,3,4) im Inneren der Anordnung unterbrochen ist, um zwei Schienenabschnittsteile (5, 6) zu bilden, welche Teile an ihren Enden eine zur Außenseite der Anordnung gerichtete Abkantung aufweisen und so einen nach außen versetzten Endabschnitt bilden, um den Abstand zwischen den Endabschnitten der Schienenabschnittsteile zu vergrößern, welcher Abstand den elektrischen Anschluss der genannten Endabschnitte der Schienenabschnitte aneinander mithilfe einer an den genannten Endabschnitten (9) befestigten Leiterbrücke (19) erlaubt, die an den genannten Endabschnitten (9) befestigt ist und die genannten Endabschnitte (9) auf der einen oder der anderen Seite der Anordnung, außerhalb der Schienenabschnitte (1, 2, 3, 4) miteinander verbindet, derart, dass die beiden genannten Teile (5, 6) der Schienenabschnitte am Eingang der Positionswechseleinrichtung eine andere Lage aufweisen als an deren Ausgang, wobei der Positionswechsel an dem Schienenabschnitt (1) vorgenommen wird, der an einem Ende dieser Schienenabschnittsanordnung (1, 2, 3, 4) angeordnet ist, und die übrigen Schienenabschnitte (2, 3, 4) der Positionswechseleinrichtung eine Abkantung (20) aufweisen, die so ausgebildet ist, dass jeder dieser übrigen Schienenabschnitte zwei in parallelen Ebenen verlaufende Bereiche aufweist, **dadurch gekennzeichnet, dass** die genannten parallelen Ebenen in einem bestimmten Abstand g zueinander angeordnet sind, welcher Abstand g etwa dem halben Abstand f entspricht, der zwischen den vor der Abkantung liegenden Schienenabschnittsteilen und den hinter der Abkantung liegenden Schienenabschnittsteilen des am genannten Ende angeordneten Schienenabschnitts (1) ausgebildet ist.

2. Positionswechseleinrichtung nach Anspruch 1, **dadurch gekennzeichnet, dass** die genannte Leiterbrücke (19) einen U-förmigen Querschnitt aufweist und einen Sockel sowie zwei Schenkel umfasst, welche Schenkel jeweils an den beiden Endabschnitten der Schienenabschnittsteile (5, 6) befestigt werden, deren Lage vertauscht wird.

3. Positionswechseleinrichtung nach Anspruch 2, **dadurch gekennzeichnet, dass** die Schenkel der Leiterbrücke (19) mithilfe von Schrauben, Schraubenmuttern und in den genannten Endabschnitten der Stromschienen sowie in den genannten Schenkeln der Leiterbrücke (19) ausgebildeten Bohrungen in den Endabschnitten der Schienenabschnittsteile befestigt sind.

4. Positionswechseleinrichtung nach Anspruch 1 bis 3, **dadurch gekennzeichnet, dass** die Schienenabschnitte (1, 2, 3, 4) beschichtet und mit einem Isolierstoffüberzug versehen sind und dass der genannte Isolierstoff an den im Inneren der Leiterbrücke (19) angeordneten Leiterabschnitten über die Länge der Leiterbrücke entfernt ist.

## Claims

1. A transposition device of a prefabricated electric canalization, said canalization comprising a certain number of conducting bars distributing different phases including or not including the neutral, said bars extending substantially parallel to one another, said transposition device being designed to reverse the position of at least two bars with respect to one another in the canalization, this device being designed to be incorporated in said canalization, and comprising the same number of portions of bar (1,2,3,4) as the number of above-mentioned bars of the canalization, at least one of these portions of bar (1,2,3 and 4) being interrupted inside the device to form two parts (5,6) of portions of bars, these parts comprising at their ends a fold (7,8) towards the outside of said device thus forming an end part (9) that is offset outwardly so as to increase the space between the end parts of the parts of portions of bar, this space enabling electric connection of said end parts of portions of bars with one another by means of a conducting bridge (19) fixed onto said end parts (9) and electrically connecting said end parts (9) via the outside of the set of portions of bars (1,2,3,4) on one side or the other of the device in such a way that the two above-mentioned parts (5,6) of portions of bar present a different position on input and output of the transposition device, transposition being performed on the portion of bar (1) situated at one of the ends of this set of portions of bar (1,2,3,4), a device wherein the other portions of bar (2,3,4) of the transposition device comprise a fold (20) such that each of these other portions of bar presents two parts extending in parallel planes, a device **characterized in that** said parallel planes are separated from one another by a certain distance g, this distance g being about a half of that f separating the parts of portions of bars before folding and the parts of portions of bars after folding of the portion of bar (1) situated at the above-mentioned end.

2. The transposition device according to claim 1, **characterized in that** the above-mentioned conducting bridge (19) presents a U-shaped transverse cross-section, said bridge presenting a base and two wings, said wings being respectively fixed to the two end parts of the parts of portions of bars, the position of which is reversed.

3. The transposition device according to claim 2, **characterized in that** the wings of the conducting bridge (19) are fixed onto said end parts of the portions of bars by means of bolts, nuts and holes provided in said end parts of bars and in the above-mentioned wings of the conducting bridge (19).

4. The transposition device according to any one of the claims 1 to 3, **characterized in that** the portions of bar (1,2,3,4) are plated and covered with an insulating material and **in that** the above-mentioned insulating material has been removed on the parts of conductor situated inside the conducting bridge (19), over the length of said bridge.
